# FASCICULE DE BREVET EUROPEEN

(11) **EP 0 444 971 B1**
(45) Date de publication et mention de la délivrance du brevet: **04.01.1995**
(21) Numéro de dépôt: 91400129.2
(22) Date de dépôt: 21.01.1991
(51) Int. Cl.: D04H 3/07

(54) **Procédé et dispositif pour la réalisation d'éléments d'armature composés de fibres résistantes**
Verfahren und Vorrichtung zur Verbundelement-Herstellung aus widerstandsfähigen Fasern
Process and device for the production of composite material of resistant fibres

(30) Priorité: 26.02.1990 FR 9002352
(43) Date de publication de la demande: 04.09.1991
(73) Titulaire: AEROSPATIALE Société Nationale Industrielle, 75781 Paris Cédex 16 (FR)
(72) Inventeur: Darrieux, Jean-Louis, F-33160 Saint Medard en Jalles (FR)
(74) Mandataire: Bonnetat, Christian

(56) Documents cités:
- DE-C- 288 794
- DE-C- 411 024
- FR-A- 478 025
- FR-A- 1 490 415
- FR-A- 2 315 562
- GB-A- 1 328 972

## Description

La présente invention concerne un procédé et un dispositif pour la réalisation d'éléments d'armature composés de fibres résistantes distribuées selon trois dimensions. Elle concerne également les pièces composites obtenues à partir desdits éléments d'armature, après imprégnation de ceux-ci à l'aide d'un liant durcissable, tel qu'une résine synthétique.

On connaît déjà, par exemple par les brevets américains US-A-2 283 802 et US-A-3 322 868, un procédé pour réaliser des éléments composés de fibres distribuées selon trois dimensions. Dans ces techniques connues, on forme un substrat de telles fibres croisées suivant au moins deux directions, puis on lie entre elles les fibres dudit substrat par piquage, en introduisant une fibre continue dans ledit substrat au moyen d'une aiguille animée d'un mouvement de va-et-vient, tandis que se produit un déplacement relatif de ladite aiguille par rapport audit substrat, de sorte que ladite fibre continue forme une ligne brisée de piquage à l'intérieur dudit substrat.

La mise en oeuvre de telles techniques ne soulève aucune difficulté, lorsque les deux faces du substrat sont dégagées, car alors ladite aiguille peut pénétrer dans ledit substrat par une desdites faces et ressortir par la face opposée. En revanche, lorsque ledit substrat repose sur un support, il est nécessaire d'aménager spécialement ledit support.

Par exemple, dans le brevet américain US-A-4 080 915 dans lequel ledit support est rigide, on prévoit d'aménager dans celui-ci des ouvertures, afin de permettre à l'extrémité de l'aiguille d'y pénétrer sans se briser. On remarquera qu'une telle solution limite fortement les possibilités de piquage, puisque le nombre d'ouvertures pratiquées dans le support est forcément limité et qu'il est impératif que, à chaque point, ladite aiguille se trouve en regard d'une telle ouverture. Ainsi, dans ce brevet antérieur, on prévoit que les ouvertures sont des fentes allongées et que les lignes de piquage sont rectilignes, en correspondance avec lesdites fentes. On voit donc que, non seulement la densité des points de piquage sur le substrat ne peut être que faible, mais encore que la forme des lignes de piquage et la distribution des points de piquage sont imposées une fois pour toutes par lesdites ouvertures.

En revanche, dans le brevet américain US-A-4 863 660, on prévoit de réaliser le support en une matière mousse ou analogue, permettant la pénétration de la pointe de l'aiguille. Dans ce cas, on n'est plus limité en ce qui concerne la densité des points de piquage ou la forme des lignes de piquage, mais il est nécessaire de réaliser le support en une matière aisément destructible, pour pouvoir dégager le substrat dudit support.

La présente invention a pour objet de remédier à ces inconvénients et de permettre le piquage d'un substrat de fibres reposant sur un support sans limitation de la densité des points de piquage ou de la forme des lignes de piquage et sans aménagement particulier dudit support.

A cette fin, selon l'invention, le procédé pour la réalisation d'éléments d'armature composés de fibres résistantes distribuées selon trois dimensions, procédé dans lequel, dans un substrat reposant sur un support et constitué de telles fibres croisées suivant au moins deux directions, on introduit par piquage, depuis la face libre dudit substrat opposée audit support, une fibre continue au moyen d'une aiguille animée d'un mouvement de va-et-vient, un déplacement relatif étant de plus engendré entre ledit support et ladite aiguille, de sorte que ladite fibre continue est constituée à l'intérieur dudit substrat d'une suite de segments consécutifs formant une ligne brisée de piquage, est remarquable en ce que ladite aiguille est courbe et impose à chaque segment de ladite fibre continue une forme courbe semblable et en ce que le mouvement de va-et-vient de ladite aiguille courbe s'effectue en rotation autour d'un axe perpendiculaire au plan de ladite aiguille et disposé du côté concave de celle-ci. De préférence, ladite aiguille courbe présente une forme circulaire et ledit axe de rotation est coaxial à ladite aiguille.

Ainsi, grâce à l'invention, on peut faire en sorte que, au maximum, ladite aiguille courbe au cours de son mouvement de va-et-vient vienne tangenter la surface dudit support sur laquelle repose ledit substrat. Ladite aiguille courbe n'a donc pas à pénétrer dans ledit support pour réaliser son opération de piquage, de sorte que ledit support n'a pas à être aménagé spécialement à cet effet. Il en résulte donc, de plus, que l'on peut faire suivre à ladite aiguille toute trajectoire désirée, ainsi que de lui faire exécuter toute densité et distribution de points de piquage désirées.

Par exemple, au cours de son mouvement de va-et-vient, ladite aiguille courbe peut venir tangenter la face dudit support sur laquelle repose ledit substrat. Au contraire, ladite aiguille courbe peut rester éloignée de la face dudit support sur laquelle repose ledit substrat.

De plus, à la fin de la course aller et au début de la course retour de ladite aiguille courbe, la pointe de celle-ci peut faire saillie par rapport à ladite face libre dudit substrat, ou bien cette pointe peut se trouver piquée à l'intérieur dudit substrat.

Par ailleurs, le déplacement relatif entre ledit support et ladite aiguille peut être rectiligne ou courbe.

Ce déplacement relatif entre ledit support et ladite aiguille peut être parallèle au plan de ladite aiguille. Il peut également être perpendiculaire au plan de ladite aiguille.

De plus, le déplacement relatif entre ledit support et ladite aiguille peut être incliné d'un angle différent de 90° par rapport au plan de ladite aiguille.

Généralement, le déplacement relatif entre ledit support et ladite aiguille s'effectue de façon que l'axe de rotation de ladite aiguille reste à distance constante dudit support. Toutefois, lors du déplacement relatif entre ledit support et ladite aiguille, l'axe de rotation de ladite aiguille peut s'écarter et se rapprocher dudit support, par exemple pour sortir de ladite aiguille la quantité de fibre nécessaire à la formation d'un point de piquage.

La présente invention concerne également un dispositif pour la mise en oeuvre du procédé.

A cet effet le dispositif pour la réalisation d'éléments d'armature composés de fibres résistantes distribuées selon trois dimensions, dispositif comportant :
. un support sur lequel repose un substrat constitué de telles fibres croisées suivant au moins deux directions ;
. une aiguille susceptible d'introduire dans ledit substrat, depuis la face libre de celui-ci opposée audit support, une fibre continue ;
. des moyens pour animer ladite aiguille d'un mouvement de va-et-vient ; et
. des moyens pour engendrer un déplacement relatif dudit support par rapport à ladite aiguille ; est remarquable en ce que :
   - ladite aiguille est courbe et guide ladite fibre continue à l'intérieur dudit substrat ; et
   - des moyens sont prévus pour que l'aiguille soit commandée en rotation de va-et-vient autour d'un axe perpendiculaire au plan de ladite aiguille et disposé du côté concave de celle-ci.

Ladite aiguille courbe peut comporter, pour le guidage de ladite fibre, un canal interne débouchant, au voisinage de la pointe de ladite aiguille, par un chas latéral. De préférence, ledit chas latéral se trouve dans la concavité de ladite aiguille.

En variante, ladite aiguille courbe peut comporter un sillon guide-fil le long de sa convexité et un chas latéral dans sa concavité au voisinage de sa pointe, ledit chas étant en communication avec ledit sillon par l'intermédiaire d'un passage.

Ladite aiguille courbe peut également comporter, au voisinage de sa pointe, un crochet tourné vers sa concavité et obturable par un clapet. Ledit clapet peut être commandé par un dispositif ou bien être commandé automatiquement par ladite fibre et par ledit substrat.

Avantageusement, ladite aiguille est montée dans un porte-aiguille articulé, autour dudit axe de rotation de l'aiguille, sur un bras déplaçable par rapport audit support. De préférence, un pince-fil commandable est monté sur ledit porte-aiguille et ledit bras porte une réserve de fibre pour ladite aiguille.

Eventuellement, ledit bras porte de plus un mécanisme pour tirer la fibre à la sortie de ladite aiguille entre chaque point de piquage. Ledit bras peut également porter un mécanisme pour former une boucle lorsque la pointe de ladite aiguille après avoir pénétrer dans ledit substrat, ressort de ladite surface libre de celui-ci.

De préférence, ledit bras est solidaire d'une machine susceptible de le déplacer par rapport au support.

Un tel support peut être fixe ; au contraire, il peut être constitué par un mandrin rotatif.

Ainsi, grâce à l'invention, on obtient un élément d'armature composé de fibres résistantes distribuées selon trois dimensions, ledit élément d'armature comportant un substrat constitué de telles fibres croisées suivant au moins deux directions, et étant remarquable en ce qu'il comporte des segments de fibre courbes disposés dans l'épaisseur dudit substrat.

A partir de cet élément d'armature, on peut réaliser une pièce composite par imprégnation dudit élément avec un liant durcissable. La pièce ainsi obtenue peut éventuellement être usinée, au moins superficiellement, pour permettre l'obtention d'une pièce définitive.

Les figures du dessin annexé feront bien comprendre comment l'invention peut être réalisée. Sur ces figures, des références identiques désignent des éléments semblables.

La figure 1 est une vue schématique et partielle en perspective, illustrant le procédé et le dispositif de piquage conformes à l'invention, à l'aide d'une aiguille creuse courbe, traversée par la fibre de piquage.

La figure 2 est une coupe, par son plan médian, de l'aiguille creuse de la figure 1.

Les figures 3a1, 3b1, 3c1 et 3d1 sont des schémas illustrant différentes mises en oeuvre du procédé de la présente invention.

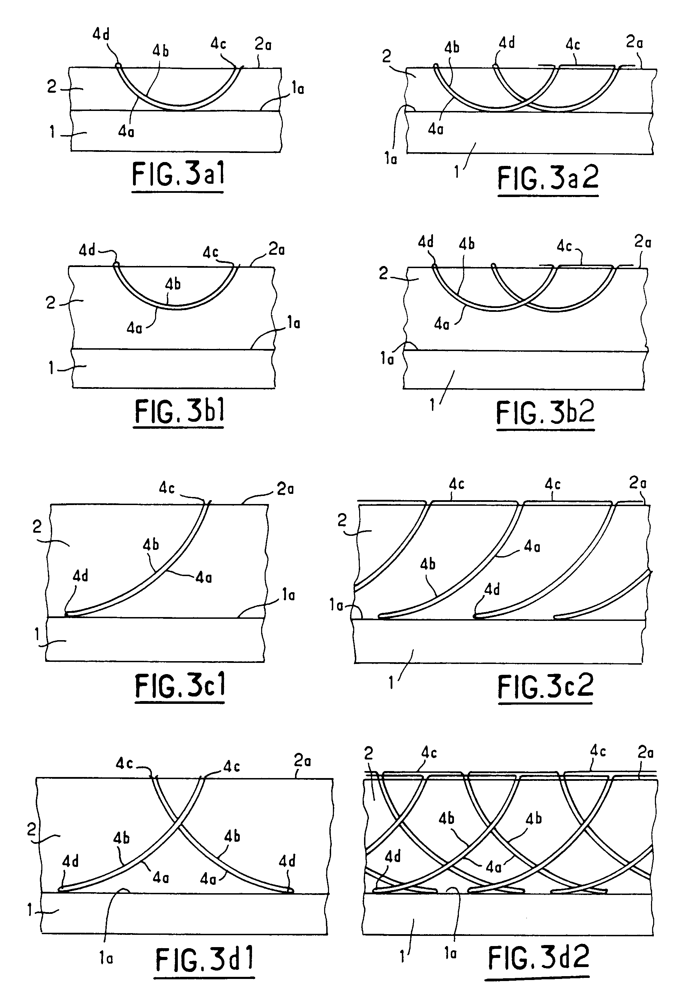

Les figures 3a2, 3b2, 3c2 et 3d2 sont des schémas illustrant d'autres mises en oeuvre du procédé conforme à l'invention.

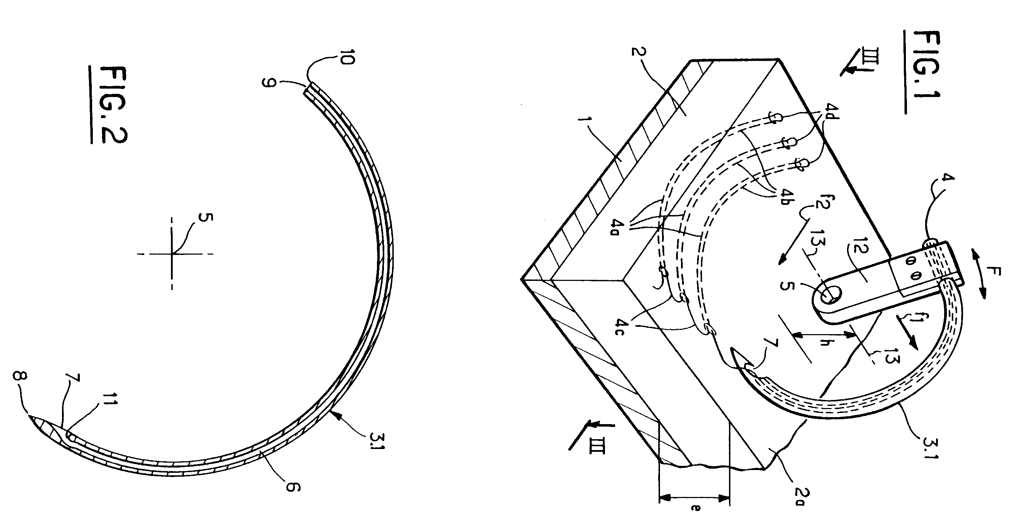

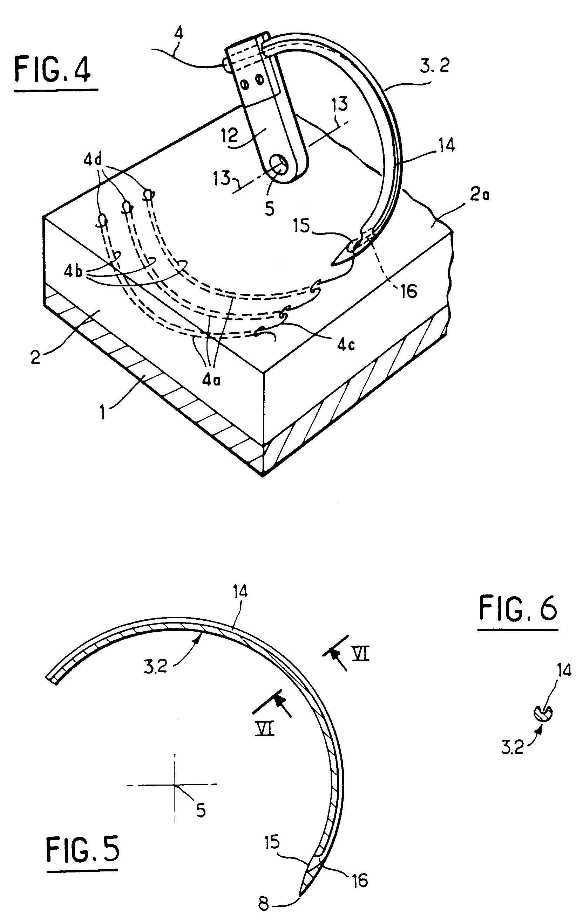

La figure 4 montre, en vue semblable à la figure 1, une variante de réalisation de l'aiguille utilisée dans le procédé de l'invention.

La figure 5 est une coupe, par son plan médian, de l'aiguille de la figure 4.

La figure 6 est une coupe transversale de l'aiguille de la figure 4, selon la ligne VI-VI de la figure 5.

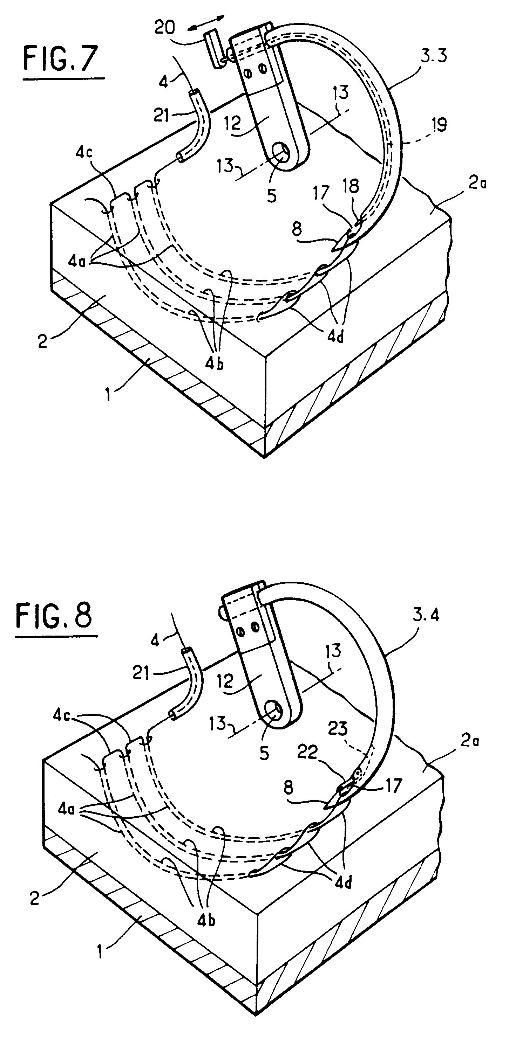

Les figures 7 et 8 montrent, en vues semblables aux figures 1 et 4, d'autres variantes de réalisation de l'aiguille utilisée dans le procédé de l'invention.

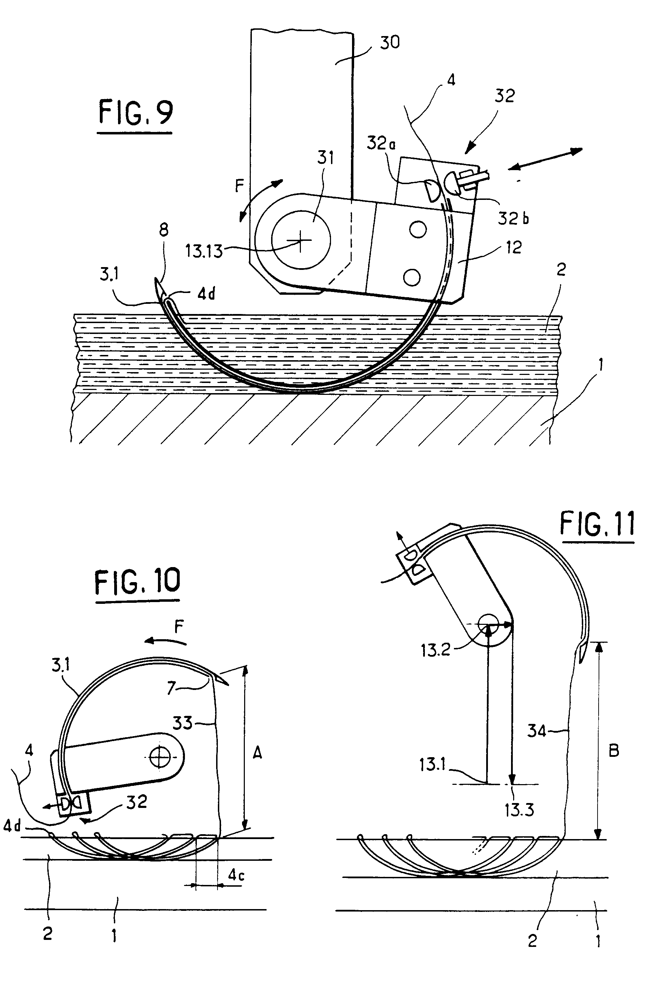

La figure 9 montre, en vue de face schématique et partielle, un mode de réalisation du dispositif selon l'invention.

Les figures 10 et 11 illustrent deux modes de mise en oeuvre du procédé conforme à la présente invention.

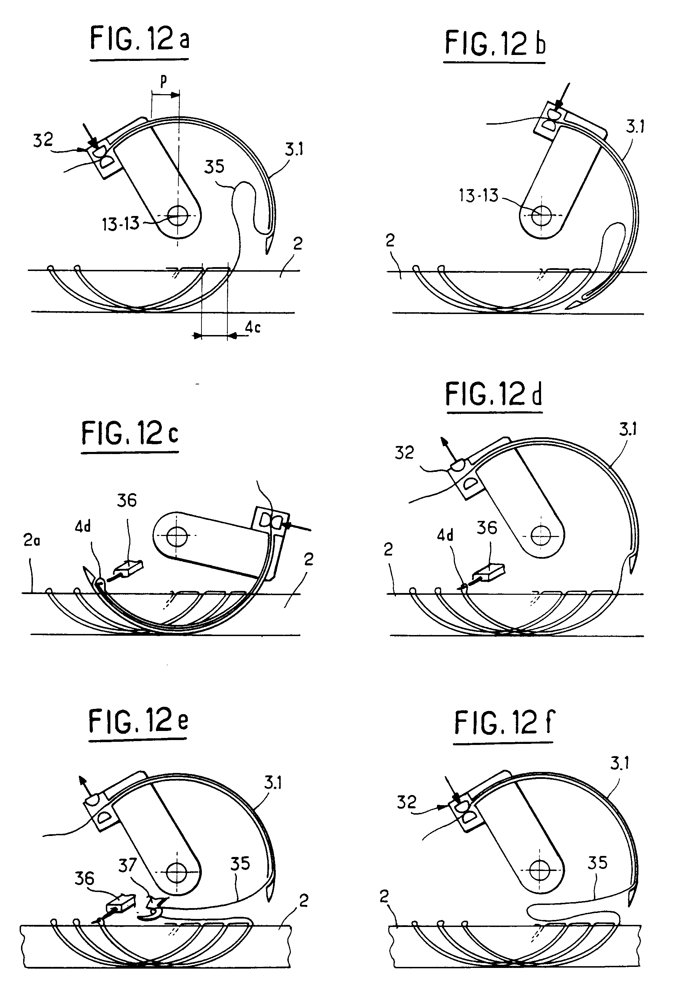

Les figures 12a à 12f illustrent plusieurs étapes d'un autre mode de mise en oeuvre du procédé selon l'invention.

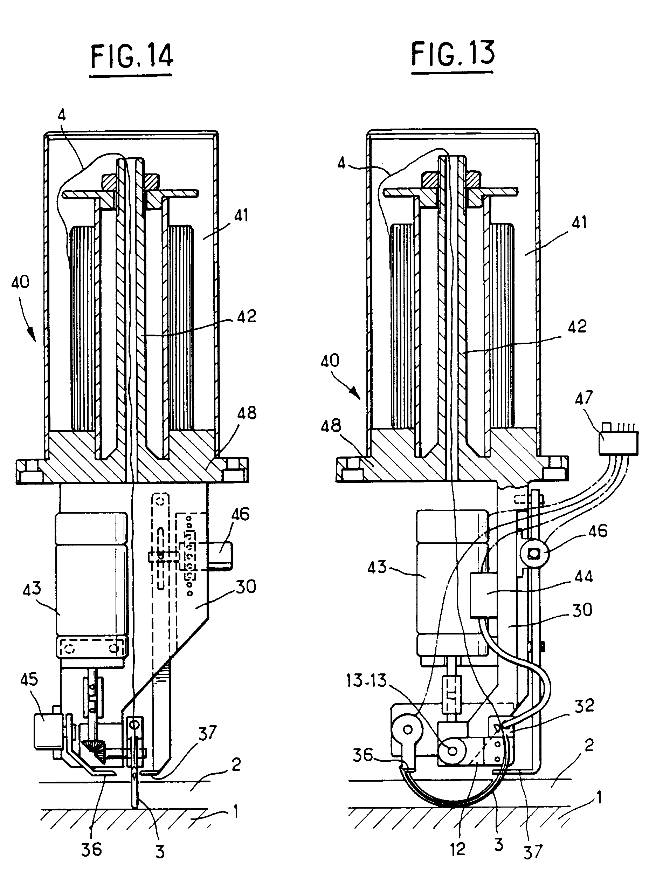

Les figures 13 et 14 montrent en élévation, selon deux directions perpendiculaires et avec coupe partielle, un dispositif selon l'invention réalisé sous la forme d'une tête de piquage.

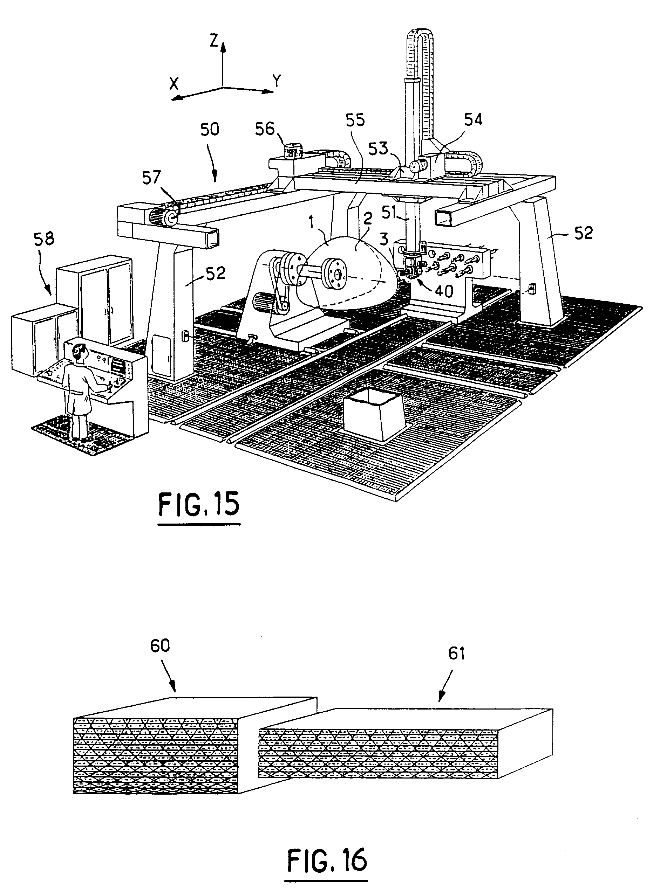

La figure 15 montre, en perspective, une machine de piquage incorporant la tête des figures 13 et 14.

La figure 16 illustre la formation d'une pièce composite définitive, par usinage d'une pièce brute, obtenue par imprégnation par un liant durcissable d'un élément d'armature réalisé selon l'invention.

Sur la figure 1, on a représenté un support 1 sur lequel repose un substrat 2 de fibres résistantes, ainsi qu'une aiguille de piquage 3.1, destinée à introduire une fibre 4 à l'intérieur dudit substrat 2.

Le support 1 peut être réalisé en toute matière désirée, telle que métallique et être éventuellement recouvert d'un revêtement (non représenté), par exemple en polytétrafluoroéthylène. Il peut cependant également être réalisé en matière mousse, comme cela est connu dans la technique. En fonction de la forme de l'élément d'armature à obtenir, il peut être constitué par une simple plaque (ce qui est représenté sur la figure 1) ou bien par un mandrin ayant une forme de révolution et destiné à être entraîné en rotation pendant l'opération de piquage (figure 15).

Le substrat de fibres résistantes 2 peut être du type à deux dimensions, constitué de fibres croisées suivant au moins deux directions. Dans ce cas, la fibre 4 est destinée à former la troisième dimension dudit substrat. Toutefois, le substrat 2 peut également être du type à trois dimensions et alors la fibre 4 est destinée à former un renfort pour la troisième dimension. Le substrat 2 peut être formé sur le support 1 ou bien être réalisé par ailleurs et amené sur ledit support pour y recevoir les opérations de piquage courbe.

Les fibres résistantes constituant le substrat 2 et la fibre 4 peuvent être de différentes natures connues, telles que verre, carbone, bore, KEVLAR (marque déposée), etc...

Comme on peut le voir également sur la figure 2, l'aiguille 3.1 présente une forme circulaire, de centre 5. Elle est creuse et est parcourue par un canal interne 6, débouchant par un chas latéral 7, adjacent à la pointe 8 de ladite aiguille et disposé dans la concavité de celle-ci. Du côté opposé à la pointe 8, le canal interne 6 débouche par un orifice 9. Le canal interne 6 est destiné à être traversé par la fibre 4, entrant par l'orifice 9 et sortant par le chas latéral 7. Afin d'éviter la détérioration, et éventuellement la cassure, de la fibre 4 par frottement contre les parois de l'orifice 9 et du chas latéral 7, le canal interne 6 comporte un évasement arrondi 10 au niveau durit orifice 9, tandis qu'un bourrelet arrondi interne 11 est prévu sur le bord du chas 7, opposé à la pointe 8.

L'extrémité de l'aiguille 3.1, opposée à la pointe 8, est fixée dans un porte-aiguille 12, susceptible d'être animé (voir la double flèche F) d'un mouvement de va-et-vient en rotation autour d'un axe 13-13, passant par le centre 5 de l'aiguille 3.1 et au moins sensiblement perpendiculaire au plan de celle-ci. Par ailleurs, un mouvement de déplacement relatif est engendré entre l'ensemble du support 1 et du substrat 2, d'une part, et l'aiguille 3.1, d'autre part.

Si, comme cela est représenté sur la figure 1, ce mouvement de déplacement relatif s'effectue suivant une direction f1 parallèle à l'axe 13-13, on conçoit aisément (éventuellement à l'aide des informations complémentaires données ci-après) que, à chaque aller de l'aiguille 3.1 (rotation dans le sens des aiguilles d'une montre sur la figure 1), cette aiguille introduit dans le substrat 2 un segment courbe 4a de la fibre 4, et que, à chacun de ses retours (rotation dans le sens inverse des aiguilles d'une montre sur la figure 1), ladite aiguille 3.1 introduit dans le substrat 2 un segment courbe 4b de ladite fibre 4, le segment 4b d'une paire de segments 4a,4b étant relié au segment 4a de la paire de segments 4a,4b suivante par un pont 4c, parallèle à l'axe 13-13, se formant pendant le déplacement relatif f1, tandis que, du côté opposé aux ponts 4c, les deux segments 4a et 4b d'une même paire sont reliés l'un à l'autre par une boucle 4d.

Par ailleurs, en fonction du rayon de courbure de l'aiguille 3.1, de la hauteur h de l'axe 13-13 au-dessus du substrat 2 et de l'épaisseur e dudit substrat, de nombreuses configurations de piquage peuvent être obtenues. On en a représenté quelques unes sur les figures 3a1, 2b1 et 3c1, qui correspondent à des vues schématiques selon la ligne III-III de la figure 1 et sur lesquelles, à des fins de clarté, on a représenté les segments 4a et 4b décalés dans le sens de l'épaisseur du substrat 2.

Par exemple, sur la figure 3a1, on a représenté une configuration de piquage pour laquelle les segments 4a et 4b sont tangents à la face la du support 1 sur laquelle repose le substrat 2 et les boucles 4d apparaissent à l'extérieur de la face libre 2a dudit substrat, à travers laquelle pénètre l'aiguille 3.1. Une telle configuration de piquage est avantageuse lorsque l'on utilise un support 1 dans lequel l'aiguille 3.1 ne pourrait pénétrer (support métallique par exemple) et que l'on désire que les segments 4a et 4b constituent un renforcement sur toute l'épaisseur dudit substrat 2.

Il va de soi, toutefois, que si le support 1 était réalisé en une matière susceptible d'être aisément pénétrée par l'aiguille 3.1, les segments 4a et 4b pourraient traverser au moins la couche superficielle dudit support. Ceci est notamment avantageux lorsque le support 1 est réalisé en une matière qui, de plus, est destructible après réalisation de l'élément d'armature.

Dans l'exemple de la figure 3b1, les boucles 4d sont également extérieures au substrat 2, du côté de la face libre 2a de celui-ci, mais les segments 4a et 4b ne pénètrent pas dans ledit substrat jusqu'à la face 1a du support 1. Dans ce cas, les segments 4a et 4b peuvent constituer un renforcement superficiel du substrat 2.

En revanche, dans l'exemple de la figure 3c1, les boucles 4d sont formées à l'intérieur du substrat 2, par exemple au niveau de la face libre 1a du support 1, et sont retenues par la pression et le frottement exercés par la matière du substrat 2. Sur la figure 3d1, on a supposé avoir effectué une première opération de piquage analogue à celle de la figure 3c1, puis une seconde opération semblable, symétrique de la première par rapport au plan passant par l'axe 13-13 et orthogonal au support 1.

Au lieu de prévoir entre le support 1 et l'aiguille 3.1, comme décrit ci-dessus, un déplacement relatif f1 parallèle à l'axe 13-13, sur les figures 3a2 à 3d2, on a illustré un déplacement rectiligne parallèle à une direction f2 perpendiculaire audit axe 13-13. Ce mode de piquage sera d'ailleurs décrit en détail, à titre d'exemple, en regard des figures 10, 11 et 12a à 12f.

Chacune des figures 3a2 à 3d2 correspond la figure 3a1 à 3d1, d'indice a,b,c ou d identique. Dans ce cas, les ponts 4c, au lieu d'être perpendiculaire au plan des dessins comme sur les figures 3a1 à 3d1 (les paires de segments 4a,4b adjacents étant ainsi superposées), sont au contraire parallèles au plan des figures 3a2 à 3d2, de sorte qu'ils sont visibles sur celles-ci et que plusieurs paires de segments courbes 4a,4b consécutives sont également visibles.

Bien entendu, le déplacement relatif de l'aiguille 3.1 par rapport au support 1 ne s'effectue pas obligatoirement suivant l'une des directions f1 ou f2. Un tel déplacement relatif pourrait avoir lieu suivant tout autre direction, par exemple à 45° par rapport à f1 et f2. De plus, on comprendra que ce déplacement relatif n'est pas obligatoirement linéaire et qu'il peut suivre une trajectoire courbe, telle que circulaire, hélicoïdale, en spirale, etc... ou bien encore une combinaison de telles trajectoires.

Sur les figures 4,5 et 6, on a illustré une première variante de réalisation 3.2 de l'aiguille 3.1. L'aiguille 3.2 est également circulaire, du centre 5. Toutefois, au lieu d'être creuse, elle est pleine et elle comporte un sillon guide-fil 14 le long de sa convexité. Du côté de sa pointe 8, elle présente un chas 15 tourné vers sa concavité et en communication, par un passage 16, avec ledit sillon 14. On conçoit aisément que l'aiguille 3.2 fonctionne de façon analogue à l'aiguille 3.1, la fibre 4 étant guidée par le sillon 14, jusqu'à travers le chas 15 (voir la figure 4), au lieu d'être guidée par le canal interne 6.

La seconde variante de réalisation 3.3 de l'aiguille 3.1, montrée par la figure 7, est circulaire, de centre 5. Du côté de sa pointe 8, elle comporte un crochet 17 tourné vers sa concavité et pouvant être fermé par un clapet formé par l'extrémité d'une tige circulaire 18, pouvant coulisser à l'intérieur d'un canal 19 prévu dans ladite aiguille, sous l'action d'un dispositif de commande en translation 20. L'aiguille 3.3 fonctionne de façon quelque peu différente de celle des aiguilles 3.1 et 3.2. Le clapet de l'aiguille 3.3 étant fermé, ladite aiguille est amenée à traverser, lors de son mouvement aller, le substrat 2 et à ressortir à travers la face libre de celui-ci. Le clapet s'ouvre et le crochet 17 saisit la fibre 4, amenée par un dispositif auxiliaire 21, après quoi ledit clapet se referme et l'aiguille 3.3 tire la fibre 4 à travers ledit substrat pendant son retrait, en formant simultanément les segments 4a et 4b d'une paire de segments, ladite fibre étant saisie par le crochet 17 au niveau d'une boucle 4d. En ressortant de la surface 2a, l'aiguille 3.3 fait saillir ladite boucle 4d, après quoi un nouveau cycle peut recommencer. De cette façon, une boucle en cours de formation est passée dans la boucle antérieurement faite, de sorte que les boucles 4d sont liées entre elles par un point de chaînette. On remarquera que l'aiguille 3.3 nécessite la traversée de la face libre 2a du substrat 2 à la fin du mouvement aller de ladite aiguille, de sorte qu'elle ne peut réaliser les configurations de piquage illustrées par les figures 3c1, 3d1, 3c2 et 3d2.

Dans la troisième variante de réalisation 3.4 de l'aiguille 3.1, montrée par la figure 8, on retrouve une aiguille à clapet fonctionnant de manière analogue à l'aiguille 3.3. Toutefois, dans ce cas, le clapet 22 est rotatif et automatique, s'ouvrant dans les mouvements aller de l'aiguille sous la poussée de la boucle 4d qui vient d'être formée, et venant se loger partiellement dans un logement 23 prévu dans la concavité de ladite aiguille. Au retour, le clapet est basculé en position fermée du crochet 17 sous la pression de la matière du substrat 2.

Sur la figure 9, on a représenté en vue de face, en le complètant, le dispositif de la figure 1. Sur cette figure 9, on a représenté un bras 30, qui est solidaire de moyens de déplacement non représentés d'une machine pour pouvoir se déplacer par rapport au support 1 et qui porte, à son extrémité dirigée en regard dudit support 1, le porte-aiguille 12 monté articulé autour de l'axe 13-13, par l'intermédiaire d'une articulation 31. De plus, un pince-fil 32 est monté sur le porte-aiguille 12, du côté de l'orifice 9 de l'aiguille 3.1, opposé à la pointe 8. Par exemple, ce pince-fil comporte une partie fixe 32a et une partie mobile 32b, commandable pour pouvoir s'écarter ou se rapprocher de ladite partie 32a, c'est-à-dire que la fibre 4, qui passe entre les parties fixe et mobile 32a et 32b, peut être libre de défiler entre celles-ci ou au contraire être pincée entre elles.

La figure 10 illustre un mode de fonctionnement du dispositif de la figure 9, principalement utilisé pour des substrats 2 de faible épaisseur. Dans ce mode de fonctionnement, à la fin du point précédent, l'aiguille 3.1 subit, le pince-fil 32 étant ouvert, une rotation de retour autour de l'axe 13-13 d'amplitude A suffisante pour que la longueur 33 de fibre 4 sortant de l'aiguille et compris entre le chas 7 et le substrat 2 corresponde à la somme des longueurs du pont 4c, du segment courbe 4a et de la boucle 4d. Après avoir fermé le pince-fil 32, on peut donc réaliser le pont 4c et le segment courbe 4a en faisant tourner l'aiguille 3.1 autour de son axe 13-13, à partir de cette position de retour, en direction du substrat 2. Lorsque l'aiguille 3.1 est arrivée à la fin de sa course de piquage, le pince-fil 32 est ouvert avant que l'aiguille commence sa course de retrait. Ainsi, au cours du retrait de l'aiguille 3.1, se forme le segment courbe 4b, par exemple grâce à la friction qu'exerce le substrat 2 sur la fibre 4. Comme on le verra ci-après, il serait possible bien entendu, dans le cas où cette friction ne serait pas suffisante, d'utiliser un organe de retenue de la boucle 4d.

Dans la variante de mode de fonctionnement illustrée par la figure 11, le bras 30 est déplacé orthogonalement au support 1. L'axe 13-13 peut être passé d'une première position 13.1 rapprochée à une position 13.2 éloignée du support 1, puis à une seconde position rapprochée 13.3. Ainsi, dans ce mouvement d'éloignement et de rapprochement de l'axe 13-13 du substrat 2, associé à la course de retour de l'aiguille 3.1 autour dudit axe 13.13, il est possible d'obtenir une amplitude de déplacement B suffisante pour dégager à la sortie de ladite aiguille, le pince-fil 32 étant ouvert, une longueur 34 de fibre 4 correspondant à la somme de longueurs du pont 4c, du segment 4a et de la boucle 4d. Cette longueur de fibre 34 est piquée dans le substrat 2, lorsque l'axe 13-13 occupe sa position rapprochée 13.3.

Les figures 12a à 12f illustrent encore un autre mode de fonctionnement. Sur la figure 12a, l'aiguille 21 vient d'être déplacée du pas p, correspondant au pont 4c, et une longueur adéquate 35 de fibre 4 est disponible à la sortie de l'aiguille 3.1. De plus, le pince-fil 32 est fermé. L'opération de piquage commence en faisant tourner l'aiguille 3.1 (figure 12b) et se poursuit jusqu'à ce que, après insertion du segment 4a, la boucle 4d apparaisse sur la face 2a (figure 12c). Un organe de retenue 36 vient saisir la boucle 4d. Le pince-fil 32 s'ouvre et l'aiguille 3.1 effectue sa course de retour en rotation en formant le segment 4b (figure 12d). A la fin de la course de retour (figure 12e), un organe 37 vient saisir la fibre 4 à la sortie de l'aiguille 3.1 pour former la longueur 35. Le pince-fil 32 se referme et les organes 36 et 37 sont rétractés et le dispositif (voir la figure 12f) est prêt à se déplacer du pas p pour prendre la position illustrée par la figure 12a. Un autre cycle de piquage peut commencer.

Les figures 13 et 14 illustrent un mode de réalisation d'une tête de piquage 40 conforme à l'invention. Le bras 30 supporte une réserve 41 de fibre 4 qui est amenée à l'aiguille 3 à travers un guide 42. Le bras 30 porte de plus un moteur 43 pour l'actionnement de l'aiguille 3 en rotation autour de l'axe 13.13, un organe 44 pour l'actionnement de l'organe de retenue de boucle 36 et un organe 46 pour l'actionnement de l'organe de saisie de fibre 37. Les différents moteur et organes 43 à 46 sont reliés à des dispositifs de commande (non représentés) par un connecteur 47. De plus, la tête de piquage 40 comporte une collerette 48 pour sa fixation sur une machine de piquage telle que celle représentée sur la figure 15.

La machine 50, montrée par la figure 15, comporte un bras 51 pouvant être déplacé suivant trois dimensions X,Y et Z, par rapport à un bâti 52. A cet effet, le bras 51 peut être déplacé verticalement en Z, par rapport à un chariot 53, grâce à un moteur 54, tandis que le chariot 53 est monté mobile en Y sur une poutre 55 grâce à un moteur 56 et que ladite poutre 55 est elle-même montée mobile en X, par rapport au bâti 52, grâce à un moteur 57. La tête de piquage 40 est montée à l'extrémité inférieure du bras 51 pour pouvoir être mobile en rotation autour de chacun des axes X,Y et Z. Par ailleurs, le support 1, illustré sur la figure 15 sous la forme d'un mandrin rotatif, porte le substrat 2. Un poste de commande 58 permet de commander le déplacement de la tête 40 par rapport au substrat 2 et les différentes opérations de piquage de l'aiguille 3 dans le substrat.

On voit ainsi que, grâce à l'invention, on peut obtenir des éléments d'armature comportant des segments fibreux courbes. Bien entendu, le support 1 peut avoir toute forme désirée et la direction des lignes de piquage, aussi bien par rapport au support 1 que par rapport au plan de l'aiguille 3, peut être choisie selon le but à obtenir. Il en est de même de la profondeur de piquage dans le substrat 2. Par ailleurs, les lignes de piquage peuvent être rectilignes, courbes, circulaires, hélicoïdales, etc...

Après obtention d'un tel élément d'armature, celui-ci est imprégné, de façon connue, de liant durcissable pour obtenir une pièce 60 (voir la figure 16). Eventuellement, cette pièce 60 est ensuite usinée, au moins superficiellement, pour l'obtention de la pièce définitive 61.

## Revendications

1. Procédé pour la réalisation d'éléments d'armature composés de fibres résistantes distribuées selon trois dimensions, procédé selon lequel, dans un substrat (2) reposant sur un support (1) et constitué de telles fibres croisées suivant au moins deux directions, on introduit par piquage, depuis la face libre (2a) dudit substrat opposée audit support, une fibre continue (4) au moyen d'une aiguille (3.1 à 3.4) animée d'un mouvement de va-et-vient, un déplacement relatif étant de plus engendré entre ledit support et ladite aiguille, de sorte que ladite fibre continue est constituée à l'intérieur dudit substrat d'une suite de segments consécutifs (4a,4b) formant une ligne brisée,
caractérisé en ce que :
- ladite aiguille (3.1 à 3.4) est courbe et impose à chaque segment (4a,4b) de ladite fibre continue (4) une forme courbe semblable ; et
- le mouvement de va-et-vient de ladite aiguille courbe s'effectue en rotation autour d'un axe (13-13) perpendiculaire au plan de ladite aiguille et disposé du côté concave de celle-ci.

2. Procédé selon la revendication 1,
caractérisé en ce que ladite aiguille courbe (3.1 à 3.4) présente une forme circulaire et en ce que ledit axe de rotation (13-13) est coaxial à ladite aiguille.

3. Procédé selon l'une des revendications 1 ou 2,
caractérisé en ce que, au cours de son mouvement de va-et-vient, ladite aiguille courbe (3.1,3.2,3.3,3.4) vient tangenter la face (1a) dudit support (1) sur laquelle repose ledit substrat (2).

4. Procédé selon l'une des revendications 1 ou 2,
caractérisé en ce que, au cours de son mouvement de va-et-vient, ladite aiguille courbe (3.1,3.2,3.3,3.4) reste éloignée de la face(1a) dudit support (1) sur laquelle repose ledit substrat (2).

5. Procédé selon l'une des revendications 1 à 4,
caractérisé en ce que, à la fin de la course aller et au début de la course retour de ladite aiguille courbe (3.1,3.2,3.3,3.4), la pointe (8) de celle-ci fait saillie par rapport à ladite face libre (2a) dudit substrat.

6. Procédé selon l'une quelconque des revendications 1 à 4,
caractérisé en ce que, à la fin de la course aller et au début de la course retour de ladite aiguille (3.1,3.2), la pointe (8) de celle-ci se trouve piquée à l'intérieur dudit substrat (2).

7. Procédé selon l'une quelconque des revendications 1 à 6,
caractérisé en ce que le déplacement relatif entre ledit support (1) et ladite aiguille est rectiligne.

8. Procédé selon l'une quelconque des revendications 1 à 6,
caractérisé en ce que le déplacement relatif entre ledit support (1) et ladite aiguille est courbe.

9. Procédé selon l'une quelconque des revendications 7 ou 8,
caractérisé en ce que le déplacement relatif entre ledit support (1) et ladite aiguille est parallèle au plan de ladite aiguille.

10. Procédé selon l'une quelconque des revendications 7 ou 8,
caractérisé en ce que le déplacement relatif entre ledit support et ladite aiguille est perpendiculaire au plan de ladite aiguille.

11. Procédé selon l'une quelconque des revendications 7 ou 8,
caractérisé en ce que le déplacement relatif entre ledit support et ladite aiguille est incliné d'un angle différent de 90° par rapport au plan de ladite aiguille.

12. Procédé selon l'une quelconque des revendications 1 à 11,
caractérisé en ce que le déplacement relatif entre ledit support et ladite aiguille s'effectue de façon que l'axe de rotation (13-13) de ladite aiguille reste à distance constante dudit support (1).

13. Procédé selon l'une quelconque des revendications 1 à 11,
caractérisé en ce que, lors du déplacement relatif entre ledit support et ladite aiguille, l'axe de rotation (13-13) de ladite aiguille peut s'écarter et se rapprocher dudit support.

14. Dispositif pour la réalisation d'éléments d'armature composés de fibres résistantes distribuées selon trois dimensions, dispositif comportant :
. un support (1) sur lequel repose un substrat (2) constitué de telles fibres croisées suivant au moins deux directions ;
. une aiguille (3.1 à 3.4) susceptible d'introduire dans ledit substrat, depuis la face libre (2a) de celui-ci opposée audit support, une fibre continue (4) ;
. des moyens pour animer ladite aiguille d'un mouvement de va-et-vient ; et
. des moyens pour engendrer un déplacement relatif dudit support par rapport à ladite aiguille ;
caractérisé en ce que :
- ladite aiguille (3.1 à 3.4) est courbe et guide ladite fibre continue (4) à l'intérieur dudit substrat (2) ; et
- des moyens (12,43) sont prévus pour que l'aiguille soit commandée en rotation de va-et-vient autour d'un axe (13-13) perpendiculaire au plan de ladite aiguille et disposé du côté concave de celle-ci.

15. Dispositif selon la revendication 14,
caractérisé en ce que ladite aiguille courbe présente une forme circulaire et en ce que ledit axe de rotation (13-13) est coaxial à-ladite aiguille.

16. Dispositif selon l'une des revendications 14 ou 15,
caractérisé en ce que ladite aiguille courbe (3.1) comporte, pour le guidage de ladite fibre, un canal interne (6) débouchant, au voisinage de la pointe (8) de ladite aiguille, par un chas latéral (7).

17. Dispositif selon la revendication 16,
caractérisé en ce que ledit chas latéral (7) se trouve dans la concavité de ladite aiguille (3.1).

18. Dispositif selon l'une des revendications 14 ou 15,
caractérisé en ce que ladite aiguille courbe (3.2) comporte un sillon guide-fil (14) le long de sa convexité et un chas latéral (15) dans sa concavité au voisinage de sa pointe (8), ledit chas (15) étant en communication avec ledit sillon (14) par l'intermédiaire d'un passage (16).

19. Dispositif selon l'une des revendications 14 ou 15,
caractérisé en ce que ladite aiguille courbe (3.3,3.4) comporte, au voisinage de sa pointe (8), un crochet (17) tourné vers sa concavité et obturable par un clapet (18,22).

20. Dispositif selon la revendication 19,
caractérisé en ce que ledit clapet est commandé par un dispositif (20).

21. Dispositif selon la revendication 19,
caractérisé en ce que ledit clapet est commandé automatiquement par ladite fibre et par ledit substrat.

22. Dispositif selon l'une quelconque des revendications 14 à 21,
caractérisé en ce que ladite aiguille (3.1 à 3.4) est montée dans un porte-aiguille (12) articulé, autour dudit axe de rotation (13-13) de l'aiguille sur un bras (30) déplaçable par rapport audit support (1).

23. Dispositif selon la revendication 22,
caractérisé en ce qu'un pince-fil commandable est monté sur ledit porte-aiguille (12).

24. Dispositif selon l'une des revendications 22 ou 23,
caractérisé en ce que ledit bras (30) porte une réserve de fibre (41) pour ladite aiguille.

25. Dispositif selon l'une des revendications 22 à 24,
caractérisé en ce que ledit bras (30) porte un mécanisme (37,46) pour tirer la fibre (4) à la sortie de ladite aiguille (3.1 à 3.4) entre chaque point de piquage.

26. Dispositif selon l'une des revendications 22 à 25,
caractérisé en ce que ledit bras (30) porte un mécanisme (36,45) pour former une boucle (4d) lorsque la pointe (8) de ladite aiguille, après avoir pénétré dans ledit substrat (2), ressort de ladite surface libre (2a) de celui-ci.

27. Dispositif selon l'une des revendications 22 à 26,
caractérisé en ce que ledit bras (30) est solidaire d'une machine (50) susceptible de le déplacer par rapport au support (1).

28. Dispositif selon l'une quelconque des revendications 14 à 27,
caractérisé en ce que ledit support (1) est fixe.

29. Dispositif selon l'une quelconque des revendications 14 à 27,
caractérisé en ce que ledit support (1) est un mandrin rotatif.

30. Elément d'armature composé de fibres résistantes distribuées selon trois dimensions, ledit élément d'armature comportant un substrat (2) constitué de telles fibres croisées suivant au moins deux directions,
caractérisé en ce qu'il comporte des segments de fibre courbes (4a,4b) disposés dans l'épaisseur dudit substrat (2), ces segments de fibre courbe appartenant à une même fibre continue.

31. Pièce composite comportant un élément d'armature composé de fibres résistantes distribuées selon trois dimensions et imprégné d'un liant durci, ledit élément d'armature comportant un substrat (2) constitué de telles fibres croisées suivant au moins deux directions,
caractérisée en ce que des segments de fibre courbes (4a,4b) sont disposés dans l'épaisseur dudit substrat (2), ces segments de fibres courtes appartenant à une même fibre continue

32. Pièce composite selon la revendication 31,
caractérisée en ce qu'elle est usinée au moins superficiellement.

## Claims

1. Process for the production of reinforcement elements composed of strong fibres distributed in three dimensions, according to which process, in a substrate (2) resting on a support (1) and consisting of such fibres intersecting along at least two directions, a continuous fibre (4) is inserted by stitching, from that free face (2a) of the said substrate opposite the said support, by means of a needle (3.1 to 3.4) driven in a to-and-fro motion, a relative movement being additionally generated between the said support and the said needle, so that the said continuous fibre consists, inside the said substrate, of a series of consecutive segments (4a, 4b) forming a broken line, characterized in that:
- the said needle (3.1 to 3.4) is curved and forces on each segment (4a, 4b) of the said continuous fibre (4) a similar curved shape; and
- the to-and-fro motion of the said curved needle is performed in rotation about an axis (13-13) perpendicular to the plane of the said needle and located on the concave side of the latter.

2. Process according to Claim 1, characterized in that the said curved needle (3.1 to 3.4) has a circular shape and in that the said rotation axis (13-13) is coaxial with the said needle.

3. Process according to one of Claims 1 and 2, characterized in that, in the course of its to-and-fro motion, the said curved needle (3.1, 3.2, 3.3, 3.4) arrives tangentially at the face (1a) of the said support (1) on which the said substrate (2) rests.

4. Process according to one of Claims 1 and 2, characterized in that, in the course of its to-and-fro motion, the said curved needle (3.1, 3.2, 3.3, 3.4) remains remote from that face (1a) of the said support (1) on which the said substrate (2) rests.

5. Process according to one of Claims 1 to 4, characterized in that, at the end of the forward stroke and at the beginning of the return stroke of the said curved needle (3.1, 3.2, 3.3, 3.4), the tip (8) of the latter projects with respect to the said free face (2a) of the said substrate.

6. Process according to any one of Claims 1 to 4, characterized in that, at the end of the forward stroke and at the beginning of the return stroke of the said needle (3.1, 3.2), the tip (8) of the latter is stitched into the said substrate (2).

7. Process according to any one of Claims 1 to 6, characterized in that the relative movement between the said support (1) and the said needle is rectilinear.

8. Process according to any one of Claims 1 to 6, characterized in that the relative movement between the said support (1) and the said needle is curved.

9. Process according to either one of Claims 7 or 8, characterized in that the relative movement between the said support (1) and the said needle is parallel to the plane of the said needle.

10. Process according to either one of Claims 7 or 8, characterized in that the relative movement between the said support and the said needle is perpendicular to the plane of the said needle.

11. Process according to either one of Claims 7 or 8, characterized in that the relative movement between the said support and the said needle is inclined at an angle different from 90° with respect to the plane of the said needle.

12. Process according to any one of Claims 1 to 11, characterized in that the relative movement between the said support and the said needle is performed so that the rotation axis (13-13) of the said needle remains at a constant distance from the said support (1).

13. Process according to any one of Claims 1 to 11, characterized in that, during the relative movement between the said support and the said needle, the rotation axis (13-13) of the said needle may move further away from and nearer to the said support.

14. Device for the production of reinforcement elements composed of strong fibres distributed in three dimensions, this device including:
· a support (1) on which rests a substrate (2) consisting of such fibres intersecting along at least two directions;
· a needle (3.1 to 3.4) capable of inserting a continuous fibre (4) into the said substrate from that free face (2a) of the latter opposite the said support;
· means for driving the said needle in a to-and-fro motion; and
· means for generating a relative movement of the said support with respect to the said needle; characterized in that:
- the said needle (3.1 to 3.4) is curved and guides the said continuous fibre (4) inside the said substrate (2); and
- means (12, 43) are provided so that the needle is driven in to-and-fro rotation about an axis (13-13) perpendicular to the plane of the said needle and located on the concave side of the latter.

15. Device according to Claim 14, characterized in that the said curved needle has a circular shape and in that the said rotation axis (13-13) is coaxial with the said needle.

16. Device according to one of Claims 14 and 15, characterized in that the said curved needle (3.1) includes, for guiding the said fibre, an internal channel (6) emerging, in the vicinity of the tip (8) of the said needle, via a lateral needle eye (7).

17. Device according to Claim 16, characterized in that the said lateral needle eye (7) lies in the concavity of the said needle (3.1).

18. Device according to one of Claims 14 and 15, characterized in that the said curved needle (3.2) includes a thread-guiding groove (14) along its convexity and a lateral needle eye (15) in its concavity in the vicinity of its tip (8), the said needle eye (15) being in communication with the said groove (14) via a passage (16).

19. Device according to one of Claims 14 and 15, characterized in that the said curved needle (3.3, 3.4) includes, in the vicinity of its tip (8), a hook (17) which faces its concavity and can be closed off by a latch (18, 22).

20. Device according to Claim 19, characterized in that the said latch is controlled by a device (20).

21. Device according to Claim 19, characterized in that the said latch is controlled automatically by the said fibre and by the said substrate.

22. Device according to any one of Claims 14 to 21, characterized in that the said needle (3.1 to 3.4) is mounted in a needle holder (12) which pivots, about the said rotation axis (13-13) of the needle, on an arm (30) which can move with respect to the said support (1).

23. Device according to Claim 22, characterized in that a controllable thread gripper is mounted on the said needle holder (12).

24. Device according to one of Claims 22 and 23, characterized in that the said arm (30) carries a reserve of fibre (41) for the said needle.

25. Device according to one of Claims 22 to 24, characterized in that the said arm (30) carries a mechanism (37, 46) for pulling the fibre (4) at the exit of the said needle (3.1 to 3.4) between each stitch.

26. Device according to one of Claims 22 to 25, characterized in that the said arm (30) carries a mechanism (36, 45) for forming a loop (4d) when the tip (8) of the said needle, after having penetrated into the said substrate (2), emerges from the said free surface (2a) of the latter.

27. Device according to one of Claims 22 to 26, characterized in that the said arm (30) is fastened to a machine (50) capable of moving it with respect to the support (1).

28. Device according to any one of Claims 14 to 27, characterized in that the said support (1) is fixed.

29. Device according to any one of Claims 14 to 27, characterized in that the said support (1) is a rotary mandrel.

30. Reinforcement element composed of strong fibres distributed in three dimensions, the said reinforcement element including a substrate (2) consisting of such fibres intersecting along at least two directions, characterized in that it includes curved fibre segments (4a, 4b) arranged in the thickness of the said substrate (2), these curved fibre segments forming part of the same continuous fibre.

31. Composite component including a reinforcement element composed of strong fibres distributed in three dimensions and impregnated with a cured [sic] binder, the said reinforcement element including a substrate (2) consisting of such fibres intersecting along at least two directions, characterized in that curved fibre segments (4a, 4b) are arranged in the thickness of the said substrate (2), these curved fibre segments forming part of the same continuous fibre.

32. Composite component according to Claim 31, characterized in that it is machined, at least on the surface.

## Patentansprüche

1. Verfahren zur Verwirklichung von Armierungselementen mit dreidimensional verteilten widerstandsfähigen Fasern, nach dem in ein Substrat (2) auf einer Unterlage (1), das aus derartigen in wenigstens zwei Richtungen gekreuzten Fasern besteht, von der freien Seite (2a) des Substrats aus, die der Unterlage entgegengesetzt ist, mit Hilfe einer Nadel (3.1 bis 3.4), der eine Hin- und Herbewegung aufgegeben wird, eine Endlosfaser (4) eingesteppt wird, wobei außerdem eine relative Verschiebung zwischen der Unterlage und der Nadel erzeugt wird, so daß die Endlosfaser innerhalb des Substrats aus einer Folge aufeinanderfolgender, eine gebrochene Linie bildender Segmente (4a,4b) besteht,
dadurch gekennzeichnet, daß
- die Nadel (3.1 bis 3.4) gebogen ist und jedem Segment (4a,4b) der Endlosfaser (4) eine ähnliche gebogene Form verleiht, und
- die Hin- und Herbewegung der gebogenen Nadel unter Drehung um eine Achse (13-13) senkrecht zur Ebene der Nadel auf der konkaven Seite derselben erfolgt.

2. Verfahren nach Anspruch 1,
dadurch gekennzeichnet, daß die gebogene Nadel (3.1 bis 3.4) eine runde Form hat, und dadurch, daß die Drehachse (13-13) koaxial zur Nadel verläuft.

3. Verfahren nach einem der Ansprüche 1 oder 2,
dadurch gekennzeichnet, daß die gebogene Nadel (3.1,3.2,3.3,3.4) während ihrer Hin- und Herbewegung die Seite (1a) der Unterlage (1) berührt, auf der sich das Substrat (2) befindet.

4. Verfahren nach einen der Ansprüche 1 oder 2,
dadurch gekennzeichnet, daß die gebogene Nadel (3.1,3.2,3.3,3.4) während ihrer Hin- und Herbewegung zu Seite (1a) der Unterlage (1), auf der sich das Sustrat (2) befindet, in Abstand verbleibt.

5. Verfahren nach einem der Ansprüche 1 bis 4,
dadurch gekennzeichnet, daß am Ende der Hinbewegung und zu Beginn der Rückbewegung der gebogenen Nadel (3.1,3.2,3.3,3.4) die Spitze (8) derselben über der freien Seite (2a) des Substrats übersteht.

6. Verfahren nach einem der Ansprüche 1 bis 4,
dadurch gekennzeichnet, daß am Ende der Hinbewegung und zu Beginn der Rückbewegung der Nadel (3.1,3.2) die Spitze (8) derselben in das Substrat (2) eingestochen ist.

7. Verfahren nach einem der Ansprüche 1 bis 6,
dadurch gekennzeichnet, daß die relative Verschiebung zwischen der Unterlage (1) und der Nadel geradlinig ist.

8. Verfahren nach einem der Ansprüche 1 bis 6,
dadurch gekennzeichnet, daß die relative Verschiebung zwischen der Unterlage (1) und der Nadel bogenförmig ist.

9. Verfahren nach einem der Ansprüche 7 oder 8,
dadurch gekennzeichnet, daß die relative Verschiebung zwischen der Unterlage (1) und der Nadel parallel zur Ebene der Nadel erfolgt.

10. Verfahren nach einem der Ansprüche 7 oder 8,
dadurch gekennzeichnet, daß die relative Verschiebung zwischen der Unterlage und der Nadel senkrecht zur Ebene der Nadel erfolgt.

11. Verfahren nach einem der Ansprüche 7 oder 8,
dadurch gekennzeichnet, daß die relative Verschiebung zwischen der Unterlage und der Nadel um einen von 90° unterschiedlichen Winkel gegenüber der Ebene der Nadel geneigt ist.

12. Verfahren nach einem der Ansprüche 1 bis 11,
dadurch gekennzeichnet, daß die relative Verschiebung zwischen der Unterlage und der Nadel so erfolgt, daß die Drehachse (13-13) der Nadel in einem konstanten Abstand zur Unterlage (1) verbleibt.

13. Verfahren nach einem der Ansprüche 1 bis 11,
dadurch gekennzeichnet, daß die Drehachse (13-13) der Nadel bei der relativen Verschiebung zwischen der Unterlage und der Nadel von der Unterlage abgestellt und an diese angestellt werden kann.

14. Vorrichtung zur Verwirklichung von Armierungselementen mit dreidimensional verteilten widerstandsfähigen Fasern, die umfaßt:
. eine Unterlage (1), auf der sich ein Substrat (2) aus solchen in wenigstens zwei Richtungen gekreuzten Fasern befindet;
. eine Nadel (3.1 bis 3.4), mit der in das Substrat von dessen freier, der Unterlage entgegengesetzten Seite (2a) aus eine Endlosfaser (4) eingeführt werden kann;
. Mittel, um der Nadel eine Hin- und Herbewegung aufzugeben, und
. Mittel zur Erzeugung einer relativen Verschiebung der Unterlage gegenüber der Nadel,
dadurch gekennzeichnet, daß
- die Nadel (3.1 bis 3.4) gebogen ist und zur Führung der Endlosfaser (4) innerhalb des Substrats (2) dient, und
- Mittel (12,43) vorgesehen sind, durch die die Nadel in einer hin- und hergehenden Drehbewegung um eine Achse (13-13) gesteuert werden kann, die senkrecht zur Ebene der Nadel auf deren konkaver Seite verläuft.

15. Vorrichtung nach Anspruch 14,
dadurch gekennzeichnet, daß die gebogene Nadel eine runde Form hat, und dadurch, daß die Drehachse (13-13) koaxial zur Nadel verläuft.

16. Vorrichtung nach einem der Ansprüche 14 oder 15,
dadurch gekennzeichnet, daß die gebogene Nadel (3.1) zur Führung der Faser einen Innenkanl (6) hat, der in der Nähe der Spitze (8) der Nadel in einem seitlichen Öhr (7) mündet.

17. Vorrichtung nach Anspruch 16,
dadurch gekennzeichnet, daß sich das seitliche Öhr (7) in der Vertiefung der Nadel (3.1) befindet.

18. Vorrichtung nach einem der Ansprüche 14 oder 15,
dadurch gekennzeichnet, daß die gebogene Nadel (3.2) entlang ihrer Vertiefung eine Fadenführungsrille (14) und in ihrer Vertiefung in der Nähe ihrer Spitze (8) ein seitliches Öhr hat, wobei das Öhr (15) mit der Rille (14) über einen Durchgang (16) in Verbindung steht.

19. Vorrichtung nach einem der Ansprüche 14 oder 15,
dadurch gekennzeichnet, daß die gebogene Nadel (3.3,3.4) in der Nähe ihrer Spitze (8) einen nach ihrer Vertiefung gerichteten Haken (17) hat, der durch eine Klappe (18,22) verschlossen werden kann.

20. Vorrichtung nach Anspruch 19,
dadurch gekennzeichnet, daß die Klappe durch eine Vorrichtung (20) gesteuert wird.

21. Vorrichtung nach Anspruch 19,
dadurch gekennzeichnet, daß die Klappe automatisch durch die Faser und durch das Substrat gesteuert wird.

22. Vorrichtung nach einem der Ansprüche 14 bis 21,
dadurch gekennzeichnet, daß die Nadel (3.1 bis 3.4) in einem Nadelhalter (12) angeordnet ist, der um die Drehachse (13-13) der Nadel gelenkig an einem Arm (30) angebracht ist, der gegenüber der Unterlage (1) verschiebbar ist.

23. Vorrichtung nach Anspruch 22,
dadurch gekennzeichnet, daß am Nadelhalter (12) eine steuerbare Fadenklemme angebracht ist.

24. Vorrichtung nach einem der Ansprüche 22 oder 23,
dadurch gekennzeichnet, daß der Arm (30) eine Faserreserve (41) für die Nadel hat.

25. Vorrichtung nach einem der Ansprüche 22 bis 24,
dadurch gekennzeichnet, daß der Arm (30) einen Mechanismus (37,46) hat, mit dem die Faser (4) am Ausgang der Nadel (3.1 bis 3.4) zwischen jedem Steppstich abgezogen werden kann.

26. Vorrichtung nach einem der Ansprüche 22 bis 25, dadurch gekennzeichnet, daß der Arm (30) einen Mechanismus (36,45) zur Bildung einer Schlinge (4d) hat, wenn die Spitze (8) der Nadel, nachdem sie in das Substrat (2) eingedrungen ist, dessen freie Seite (2a) verläßt.

27. Vorrichtung nach einem der Ansprüche 22 bis 26, dadurch gekennzeichnet, daß der Arm (30) mit einer Maschine (50) verbunden ist, durch die er gegenüber der Unterlage (1) verschoben werden kann.

28. Vorrichtung nach einem der Ansprüche 14 bis 27,
dadurch gekennzeichnet, daß die Unterlage (1) feststehend ist.

29. Vorrichtung nach einem der Ansprüche 14 bis 27,
dadurch gekennzeichnet, daß die Unterlage (1) aus einem Drehdorn besteht.

30. Armierungselement mit dreidimensional verteilten widerstandsfähigen Fasern, wobei das Armierungselement ein Substrat (2) aus solchen in wenigstens zwei Richtungen gekreuzten Fasern hat, dadurch gekennzeichnet, daß es gebogene Fasersegmente (4a,4b) hat, die in der Dicke des Substrats (2) angeordnet sind, wobei diese gebogenen Fasersegmente zu ein und derselben Endlosfaser gehören.

31. Verbundteil mit einem Armierungselement aus dreidimensional verteilten widerstandsfähigen Fasern, die mit einem gehärteten Bindemittel getränkt wurden, wobei das Armierungselement ein Substrat (2) aus solchen in wenigstens zwei Richtungen gekreuzten Fasern hat,
dadurch gekennzeichnet, daß gebogene Fasersegmente (4a,4b) in der Dicke des Substrats (2) angeordnet sind, wobei diese gebogenen Fasersegmente zu ein und derselben Endlosfaser gehören.

32. Verbundteil nach Anspruch 31,
dadurch gekennzeichnet, daß es wenigstens an der Oberfläche bearbeitet ist.
